# EUROPEAN PATENT APPLICATION

(11) **EP 3 343 331 A1**
(43) Date of publication of application: **04.07.2018**
(21) Application number: 15884918.2
(22) Date of filing: 14.12.2015
(51) Int. Cl.: G06F 3/041, G02F 1/1335

(54) **DISPLAY PANEL, TOUCH DISPLAY DEVICE, AND DISPLAY PANEL MANUFACTURING METHOD**

(30) Priority: 30.07.2015 CN 201510457450
(71) Applicant: BOE Technology Group Co., Ltd., Beijing 100015 (CN); Hefei Xinsheng Optoelectronics Technology Co., Ltd, Anhui 230012 (CN)
(72) Inventor: XU, Jun, Beijing 100176 (CN)
(74) Representative: Fritzsche, Thomas
(86) International application number: PCT/CN2015/097232
(87) International publication number: WO 2017/016137

(57) **Abstract**

The present disclosure provides a display panel, a touch display device and a method for fabricating a display panel, and relates to the field of display technology. The display panel comprises a first substrate and a second substrate, the first substrate has a first periodic structure, the second substrate has a second periodic structure and is arranged on the first substrate. The display panel further comprises a Moiré fringe inhibition layer, which is arranged on the second substrate and is configured to decrease a pitch of Moiré fringes produced by the first and second periodic structure. In the present disclosure, by additionally providing a Moiré fringe inhibition layer, it is possible to alleviate or eliminate Moiré fringes, thus improving the visual effect of a product and the visual experience of a user. (Fig. 2b)

## Description

### TECHNICAL FIELD

The present disclosure relates to the field of display technology, and in particular to a display panel and a method for fabricating the same, a touch display device.

### BACKGROUND

During the informational process of social needs, there is a great demand for information display. Currently the most popular display in the market is a liquid crystal display. In the liquid crystal display, an electric field is used to control the rotation of liquid crystal for gray scale display, and a color display is realized by means of a color film. The liquid crystal display has excellent properties of being thin, light, and low power consumption, and has been widely applied to a computer, a TV set, and a display for a mobile terminal.

A touch panel emerges for the purpose of better realizing human-machine interaction function. However, the touch panel still suffers from many problems. In particular, as a serious optical problem in a capacitive touch panel, the problem of Moiré fringes not only severely restricts development in product, but also forms a constraint in design.

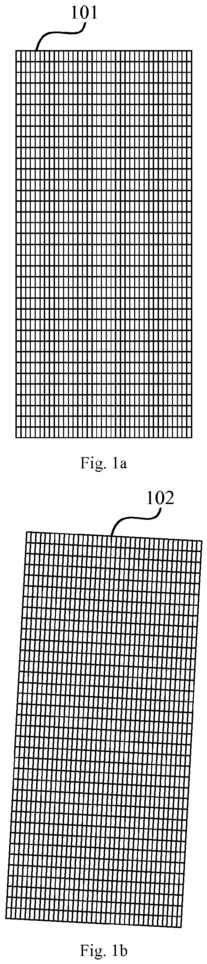

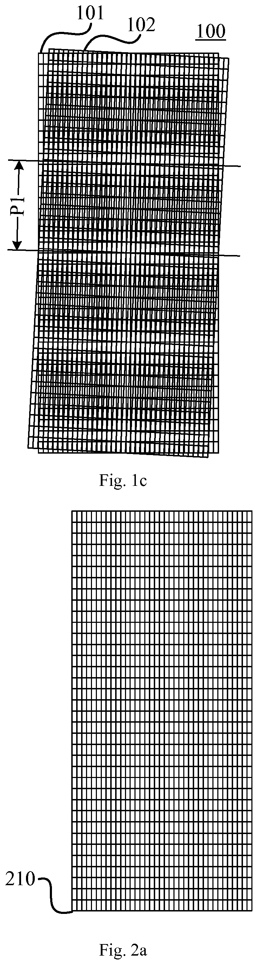

Figs. 1a, 1b and 1c schematically show an existing display panel 100. A first substrate 101 shown in Fig. 1a has a first periodic structure, and a second substrate 102 shown in Fig. 1b has a second periodic structure. The first substrate 101 and the second substrate 102 are stacked to form the display panel 100. Since there is a positional deviation between the first and second substrate, Moiré fringes with a pitch of P1 are produced as a result of spatial beating between the first and second periodic structure, as shown in Fig. 1c. The Moiré fringes will directly affect the visual effect of product and decrease the visual experience of a user.

Currently, it is usually proposed to non-homogenize the periodic structure relevant with the Moiré fringes to solve the above problem about Moiré fringes. However, this increases the difficulty of the process of product and decreases the yield. Therefore, there is a need in the art for a display panel and a method for fabricating the same which can alleviate or eliminate Moiré fringes.

### SUMMARY

It is an object of the present disclosure to alleviate or solve one or more of the above described problems. In particular, the present disclosure proposed to provide an additional layer for alleviating or eliminating effects of Moiré fringes, thus improving the visual effect of the product and the visual experience of the user.

In a first aspect, it is provided a display panel. The display panel comprises a first substrate and a second substrate, the first substrate has a first periodic structure, and the second substrate has a second periodic structure and is arranged on the first substrate. The display panel further comprises a Moiré fringe inhibition layer, which is arranged on the second substrate and is configured to decrease a pitch of Moiré fringes produced by the first and second periodic structure.

Currently, a method in which the first or second periodic structure is non-homogenized is usually adopted to alleviate or eliminate Moiré fringes. However, this increases the difficulty of process and decreases the product yield. In the present disclosure, by providing a Moiré fringe inhibition layer in a display panel, Moiré fringes which are produced as a result of spatial beating between the first and second periodic structure is alleviated or eliminated, the display quality of the display panel is improved, and the visual experience of the user is improved. According to the technical solution the present disclosure, by additionally providing a Moiré fringe inhibition layer, it is possible to alleviate or eliminate Moiré fringes, so that the difficulty of process is decreased and the product yield is improved. This solution can not only be applied to a risk design for avoiding Moiré fringes prior to product development, but also to solve the problem of Moiré fringes after product development. In addition, this solution is simple in design, does not impose any special requirement for the process of the Moiré fringe inhibition layer, and is relatively easy to realize.

Preferably, the Moiré fringe inhibition layer can have a third periodic structure.

According to the present disclosure, the Moiré fringe inhibition layer has a third periodic structure, so that the Moiré fringe inhibition layer is simple to fabricate. In addition, by arranging the third periodic structure and utilizing the interaction among the first, second and third periodic structure, Moiré fringes with a decreased pitch can be produced, or the Moiré fringes can be completely eliminated.

Preferably, the third periodic structure is identical with the first periodic structure; or the third periodic structure is identical with the second periodic structure.

According to the present disclosure, the third periodic structure of the Moiré fringe inhibition layer can be extracted from the first periodic structure of the first substrate, or the second periodic structure of the second substrate, so that it is realized in a convenient and effective manner.

Preferably, the third periodic structure is different from the first and second periodic structure, and has a rectangular or rhombus grid.

According to the present disclosure, the third periodic structure can be different from the first and second periodic structure, and has a rectangular or rhombus grid. Therefore, in the present disclosure, the Moiré fringe inhibition layer is flexible in design, and is easy to realize. In addition, by adjusting a period of the third periodic structure, the pitch of Moiré fringes can be effectively decreased.

Preferably, the third periodic structure is offset with respect to the first and second periodic structure.

According to the present disclosure, by offsetting the third periodic structure with respect to the first and second periodic structure, the pitch of Moiré fringes can be effectively decreased.

Preferably, the third periodic structure is inclined with respect to the first and second periodic structure.

According to the present disclosure, by inclining the third periodic structure with respect to the first and second periodic structure, the interaction among the first, second and third periodic structure can be utilized so as to decrease the pitch Moiré fringes produced by them, thus alleviating or eliminating the Moiré fringes.

Preferably, the third periodic structure is inclined with respect to the first periodic structure by an angle of -5°∼5°.

According to the present disclosure, an inclination angle between the first and second periodic structure is usually -5°∼5°. By inclining the third periodic structure of the Moiré fringe inhibition layer with respect to the first periodic structure of the first substrate by an angle of -5°∼5°, Moiré fringes can be effectively alleviated or eliminated.

Preferably, the Moiré fringe inhibition layer may comprise support layer and the third periodic structure on the support layer.

According to the present disclosure, this solution is simple in design, does not impose any special requirement for the process of the Moiré fringe inhibition layer, and is relatively easy to realize.

Preferably, the support layer can be made from polyethylene terephthalate (PET), and the third periodic structure can be an electrically conductive mesh formed by nano-Ag, graphene or Cu.

According to the present disclosure, a metal mesh technique which is known per se can be utilized to form the electrically conductive mesh on the support layer of PET.

Preferably, the support layer can be made from a dielectric material, and the third periodic structure can be made from a material with a different transmittance from the support layer.

According to the present disclosure, by utilizing materials with different transmittance to form the support layer and the third periodic structure, the cost is decreased.

Preferably, the Moiré fringe inhibition layer can be directly formed on the second substrate.

According to the present disclosure, since the support layer of a dielectric material can be deposited directly on the second substrate to form the third periodic structure, the fabrication process is simple.

Preferably, the Moiré fringe inhibition layer can be a component detachable from the second substrate.

According to the present disclosure, the Moiré fringe inhibition layer can be a detachable component, which can be arranged on the second substrate by binding. In case the Moiré fringe inhibition layer is a detachable component, during binding the Moiré fringe inhibition layer to the second substrate, the Moiré fringe inhibition layer can be adjusted, which facilitates eliminating Moiré fringes more effectively. In addition, the Moiré fringe inhibition layer can be fabricated in advance separately, and then bound onto the second substrate. In this way, the process line holding time can be decreased, and the production cost of the display panel is decreased.

Preferably, the first substrate can be a color film substrate, and the second substrate can be a touch substrate.

According to the present disclosure, a black matrix in the color film substrate forms the first periodic structure, and a metal mesh touch electrode in the touch substrate forms the second periodic structure. Currently the metal mesh technique is actively advanced by manufacturers to replace ITO and apply to a touch display (i.e., G1M solution). However, a periodic structure of the metal mesh and a periodic structure of the black matrix in the color film substrate of a liquid crystal module will be subject to spatial beating, which produces Moiré fringes discernible by human eyes. The present disclosure can effectively solve the problem of Moiré fringes in G1M solution.

In a second aspect, the present disclosure provides a touch display device, which comprises the display panel as described above.

In a third aspect, the present disclosure provides a method for fabricating a display panel, comprising:
S1, preparing a first substrate which has a first periodic structure;
S2, arranging a second substrate on the first substrate which has a second periodic structure; and
S3, arranging a Moiré fringe inhibition layer on the second substrate to decrease a pitch of Moiré fringes produced by the first and second periodic structure.

Preferably, step S3 may comprise: arranging the Moiré fringe inhibition layer on the second substrate, wherein the Moiré fringe inhibition layer has a third periodic structure.

Preferably, step S3 may comprise: arranging the Moiré fringe inhibition layer on the second substrate, wherein the third periodic structure of the Moiré fringe inhibition layer is extracted from the first periodic structure or the second periodic structure.

Preferably, step S3 may comprise: forming the third periodic structure which is different from the first and second periodic structure, wherein the third periodic structure has a rectangular or rhombus grid.

Preferably, step S3 may comprise: arranging the Moiré fringe inhibition layer on the second substrate, and offsetting the third periodic structure with respect to the first and second periodic structure.

Preferably, step S3 may comprise: arranging the Moiré fringe inhibition layer on the second substrate, and inclining the third periodic structure with respect to the first and second periodic structure.

Preferably, the third periodic structure can be inclined with respect to the first periodic structure by -5°∼5°.

Preferably, step S3 may comprise: preparing a support layer; and forming the third periodic structure on the support layer.

Preferably, step S3 may comprise: forming the support layer from polyethylene terephthalate; and forming the third periodic structure from an electrically conductive mesh of nano-Ag, graphene or Cu.

Preferably, step S3 may comprise: forming the support layer from a dielectric material; and forming the third periodic structure from a material with a different transmittance from the support layer.

Preferably, step S3 may comprise: forming the Moiré fringe inhibition layer directly on the second substrate.

Preferably, step S3 may comprise: arranging the Moiré fringe inhibition layer on the second substrate by binding.

Preferably, step S1 may comprise preparing a color film substrate; and step S2 may comprise arranging a touch substrate on the color film substrate.

The touch display device and the method for fabricating the display panel of the present disclosure have the same or similar benefits with those of the display panel as described above, which are not described in details for simplicity.

According to the present disclosure, a new layer is provided to alleviate or eliminate the effect of Moiré fringes, so that the visual effect of the product and the visual experience of the user are improved, the difficulty of process is decreased, and the product yield is improved. The present disclosure can not only be applied to a risk design for avoiding Moiré fringes prior to product development, but also to solve the problem of Moiré fringes after product development. In addition, this solution is simple in design, does not impose any special requirement for the process of the Moiré fringe inhibition layer, and is relatively easy to realize.

### BRIEF DESCRIPTION OF the DRAWINGS

Figs. 1a, 1b and 1c schematically show an existing display panel, wherein Fig. 1a shows a first periodic structure of a first substrate in the display panel, Fig. 1b shows a second periodic structure of a second substrate in the display panel, and Fig. 1c shows Moiré fringes produced by the first and second periodic structure;
Figs. 2a and 2b schematically show a display panel according to the present disclosure, wherein Fig. 2a shows a Moiré fringe inhibition layer according to the present disclosure, and Fig. 2b shows a display panel with a decreased pitch of Moiré fringes according to the present disclosure;
Figs. 3a and 3b schematically show a Moiré fringe inhibition layer according to the present disclosure; and
Fig. 4 schematically shows flow chart for a method for fabricating a display panel according to the present disclosure.

### DETAILED DESCRIPTION OF EMBODIMENTS

Embodiments of the display panel, the touch display device, the method for fabricating the display panel of the present invention will be described in details with reference to the drawings.

In drawings of the present disclosure, only structures, portions and/or steps relevant with the inventive concept are illustrated, while those irrelevant structures, portions and/or steps are not illustrated or are partially illustrated.

Reference numerals: 100, 200 display panel, 101 first substrate, 102 second substrate, 210, 211, 212 Moiré fringe inhibition layer, and PI, P2 pitch of Moiré fringes.

Figs. 1a, 1b and 1c illustrate the Moiré fringes by taking a touch display device as an example. In particular, in a display panel 100 of the touch display device, the first substrate 101 can be a color film substrate, in which a black matrix is arranged periodically to form a first periodic structure. The second substrate 102 can be a touch substrate, in which touch electrodes are arranged periodically to form a second periodic structure. In practice, since the first periodic structure of the black matrix is different from or not aligned with the second periodic structure of the touch electrodes. For example, they are offset or inclined (shown in Figs. 1b, 1c), so that the first and second periodic structure interact to produce spatial beating effect, which produce Moiré fringes with a pitch of PI and discernible by human eyes.

As can be seen, Moiré fringes appear in the touch display device. In addition, in other liquid crystal display devices (LCDs) or organic light emitting devices (OLEDs), in case the first and second periodic structure is present in substrates, Moiré fringes may appear once the first periodic structure and the second periodic structure are bound. Moreover, LCDs and OLEDs may further comprise three or more periodic structures, which will also lead to Moiré fringes. The principles and effects of the present disclosure will be described hereinafter, by taking the simplest case in which a color film substrate in the touch display device comprises a first periodic structure and a touch substrate comprises a second periodic structure as an example. However, as described above, the present disclosure is not limited in this aspect, but can be applied to eliminate Moiré fringes produced by two or more periodic structures in any LCD or OLED.

### First embodiment

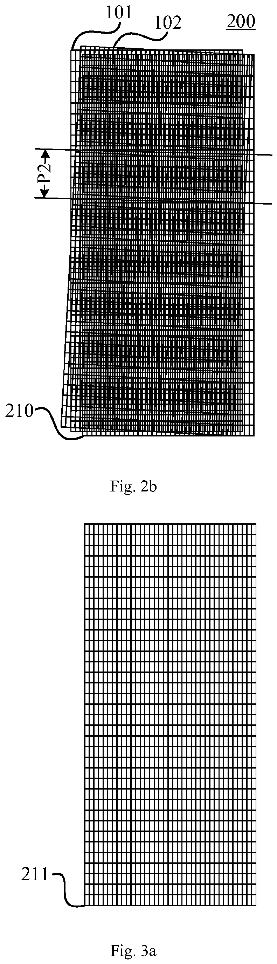

As shown in Fig. 2a, the present disclosure additionally provides a Moiré fringe inhibition layer 210. Fig. 2b shows a display panel 200. When the Moiré fringe inhibition layer 210 is bound onto the second substrate 102, the pitch of Moiré fringes becomes P2. From comparison between Fig. 1c and Fig. 2b, it can be seen that P2 is smaller than P1. Namely, the pitch of Moiré fringes decrease. When the pitch of Moiré fringes is small enough, Moiré fringes is not discernible by human eyes. In this case, the Moiré fringes can be deemed being eliminated. For example, as for a distance of distinct vision of 30 cm, when the pitch of Moiré fringes is smaller than 70-80 µm, Moiré fringes are not discernible by human eyes.

In the solution of the present disclosure, a Moiré fringe inhibition layer is additionally provided to alleviate or eliminate Moiré fringes. This is different from the existing method of alleviating or eliminating Moiré fringes by non-homogenizing the first or second periodic structure. According to this solution, by additionally providing a Moiré fringe inhibition layer, it is possible to alleviate or eliminate Moiré fringes, and it is not necessary to alter the existing pattern and process for the first substrate and the second substrate. This makes the solution of the present disclosure simple in design and easy to realize. This solution can be applied to a risk design for avoiding Moiré fringes prior to product development, but also to solve the problem of Moiré fringes after product development.

As shown in Fig. 2a, in a preferred embodiment, the Moiré fringe inhibition layer 210 can have a third periodic structure. The Moiré fringe inhibition layer 210 with a periodic structure for example can be formed by approaches like photolithography, screen printing, nanoimprinting, so that the Moiré fringe inhibition layer 210 is simple to fabricate. The Moiré fringe inhibition layer 210 has the third periodic structure, so that the third periodic structure of the Moiré fringe inhibition layer 210 can be utilized to interact with the first and second periodic structure of the first substrate 101 and the second substrate 102, for producing Moiré fringes with a decreased pitch.

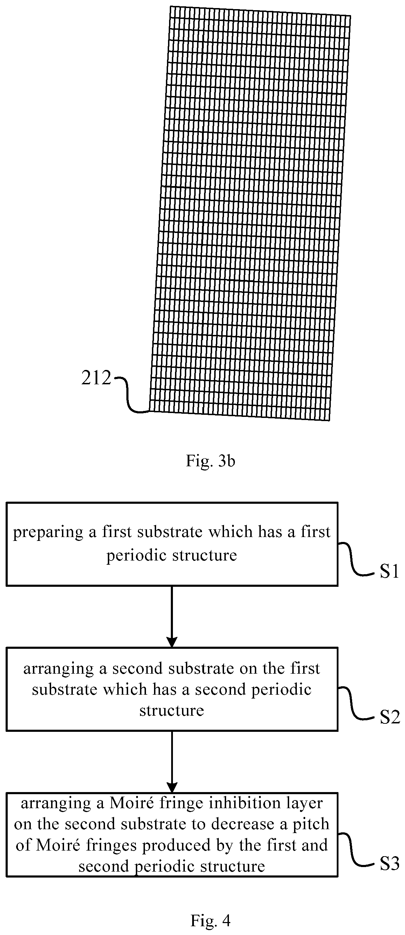

Figs. 3a and 3b show an example of the Moiré fringe inhibition layer 210. As shown in Fig. 3a, the third periodic structure of the Moiré fringe inhibition layer 211 can be identical with the first periodic structure of the first substrate 101 (Fig. 1a). Optionally, as shown in Fig. 3b, The third periodic structure of the Moiré fringe inhibition layer 212 can be identical with the second periodic structure of the second substrate 102 (Fig. 1b). Thereby, in a preferred embodiment, the third periodic structure of the Moiré fringe inhibition layer 211, 212 can be extracted from the first periodic structure of the first substrate 101 or the second periodic structure of the second substrate 102.

It is noted that Figs. 3a and 3b only schematically show the third periodic structure of the Moiré fringe inhibition layer 211, 212. For example, the Moiré fringe inhibition layer 212 in Fig. 3b has a rectangular grid, and is identical with the second periodic structure of the second substrate 102 in Fig. 1b. However, when a metal mesh technique is used to replace ITO for forming touch electrodes in the touch display device of the display panel 200, touch electrodes are periodically arranged and have a rhombus grid. In this case, the third periodic structure of the Moiré fringe inhibition layer 212 can also have a rhombus grid.

The third periodic structure of the Moiré fringe inhibition layer 210 can be different from the first and second periodic structure of first and second substrate 101, 102. By designing the third periodic structure of the Moiré fringe inhibition layer 210, a better effect than Fig. 2b can be realized. Namely, P2 is far smaller than P1. The design parameters of the third periodic structure may comprise, but not limited to, shape, period, aperture ratio, or the like. For example, the third periodic structure can have a rectangular or rhombus grid. In addition, the third periodic structure can have a square grid. The period indicates a length of a side in a unit grid. The aperture ratio indicates a ratio between the opening area of the grid and a total area of the overall structure. By adjusting these design parameters, the effects of inhibiting Moiré fringes can be improved.

As shown in Fig. 2, for example, the third periodic structure of the Moiré fringe inhibition layer 210 can be offset with respect to the first periodic structure of the first substrate 101. As shown, the third periodic structure of the Moiré fringe inhibition layer 210 is further offset with respect to the second periodic structure of the second substrate 102. In the context of the present disclosure, the term "offset" indicates displacement in a plane parallel with the first substrate or second substrate. By offsetting the third periodic structure with respect to the first and second periodic structure, a sharp decrease in the pitch P2 of Moiré fringes can be realized.

Preferably, the third periodic structure of the Moiré fringe inhibition layer 210 can be inclined with respect to the first periodic structure of the first substrate 101. In the context of the present disclosure, the term "incline" indicates rotation in the plane parallel with the first substrate or second substrate. By inclining the third periodic structure with respect to the first and second periodic structure, a decreased pitch P2 of Moiré fringes can also be realized.

In practice, the inclination angle between the first and second periodic structure of the first substrate 101 and the second substrate 102 is generally -5°∼5°. To this end, by inclining the third periodic structure of the Moiré fringe inhibition layer 210 with respect to the first periodic structure of the first substrate 101 by an angle of -5°∼5°, Moiré fringes can be effectively alleviated or eliminated.

It is noted that the Moiré fringe inhibition layer 210 can be inclined with respect to the first substrate 101, but not inclined with respect to the second substrate 102. It is understood that the Moiré fringe inhibition layer 210 can be inclined with respect to the second substrate 102, but not inclined with respect to the first substrate 101. Alternatively, the Moiré fringe inhibition layer 210 can be inclined with respect to with respect to both the first substrate 101 and the second substrate 102. It is further noted that the inclination angle between the Moiré fringe inhibition layer 210 and the first substrate 101 and/or the second substrate 102 can be set as needed.

In an embodiment, the Moiré fringe inhibition layer 210 may comprise a support layer and a third periodic structure formed on the support layer.

Preferably, the support layer can be made from polyethylene terephthalate (PET), and the third periodic structure can be an electrically conductive mesh formed by nano-Ag, graphene or Cu. In this embodiment, the existing metal mesh technique can be utilized to form an electrically conductive mesh on the support layer of PET.

Preferably, the support layer can be made from a dielectric material, and the third periodic structure can be made from a material with a transmittance different from the support layer. Thereby, dielectric materials with different transmittance are used to form the support layer and the third periodic structure. For example, dielectric materials like silicon nitride, silicon oxide or silicon oxynitride can be used to form the support layer. Then a material with a different transmittance is used to form the third periodic structure.

Preferably, the Moiré fringe inhibition layer 210 can be directly formed on the second substrate 102. Thereby, the support layer of a dielectric material can be directly formed on the second substrate 120 by for example deposition, and further the third periodic structure is formed, so that the fabricating process is relatively simple.

In an embodiment, the Moiré fringe inhibition layer 210 can be a component which is detachable from the second substrate 102. Thereby, the Moiré fringe inhibition layer 210 can be arranged on the second substrate 102 by binding. In case the Moiré fringe inhibition layer 210 is a detachable component, when the Moiré fringe inhibition layer 210 is bound onto the second substrate 102, the Moiré fringe inhibition layer can be adjusted to alleviate or eliminate Moiré fringes more effectively. In addition, in this case, the Moiré fringe inhibition layer 210 can be fabricated in advance separately, and then bound onto the second substrate 102 at appropriate timing. As a result, the process line holding time can be decreased, and the production cost of the display panel can be decreased.

### Second embodiment

The present disclosure further provides a touch display device. The touch display device may comprise the display panel as described above.

### Third embodiment

The present disclosure further provides a method for fabricating a display panel. As shown in Fig. 4, the method comprises steps of: S1, preparing a first substrate 101 which has a first periodic structure; S2, arranging a second substrate 102 on the first substrate 101 which has a second periodic structure; and S3, arranging a Moiré fringe inhibition layer 210 on the second substrate 102 to decrease a pitch of Moiré fringes produced by the first and second periodic structure.

Preferably, step S3 may comprise: arranging the Moiré fringe inhibition layer 210 on the second substrate 102, wherein the Moiré fringe inhibition layer 210 has a third periodic structure, as shown in Fig. 2a.

Preferably, step S3 may comprise: arranging the Moiré fringe inhibition layer 210 on the second substrate 102, wherein the third periodic structure of the Moiré fringe inhibition layer 210 is extracted from the first periodic structure of the first substrate 101 or the second periodic structure of the second substrate 102. Thereby, the third periodic structure of Moiré fringe inhibition layer 210 can be identical with the first periodic structure of the first substrate 101 or the second periodic structure of the second substrate 102.

Preferably, step S3 may comprise: forming the third periodic structure which is different from the first and second periodic structure, wherein the third periodic structure has a rectangular or rhombus grid.

Preferably, step S3 may comprise: arranging the Moiré fringe inhibition layer on the second substrate, and offsetting the third periodic structure with respect to the first and second periodic structure. Optionally, the third periodic structure can be inclined with respect to the first and second periodic structure. In particular, the third periodic structure can be inclined with respect to the first periodic structure by -5°∼5°.

Preferably, step S3 may comprise: preparing a support layer; and forming a third periodic structure on the support layer.

Preferably, step S3 may comprise: forming the support layer from polyethylene terephthalate; and forming the third periodic structure from an electrically conductive mesh of nano-Ag, graphene or Cu.

Preferably, step S3 may comprise: forming the support layer from a dielectric material; and forming the third periodic structure from a material with a different transmittance from the support layer.

Preferably, step S3 may comprise: forming the Moiré fringe inhibition layer directly on the second substrate.

Preferably, step S3 may comprise: arranging the Moiré fringe inhibition layer on the second substrate by binding.

Preferably, step S1 may comprise preparing a color film substrate; and step S2 may comprise arranging a touch substrate on the color film substrate.

In the above methods, a Moiré fringe inhibition layer is additionally provided to alleviate or eliminate Moiré fringes. This is different from the existing method of alleviating or eliminating Moiré fringes by non-homogenizing the first or second periodic structure. Thereby, it is not necessary to alter the existing pattern and process for the first substrate and the second substrate. This makes the method simple in design and easy to realize.

Apparently, the skilled person in the art can make various modifications and variations to the present invention without departing from the spirit and the scope of the present invention. In this way, provided that these modifications and variations of the present invention belong to the scopes of the claims of the present invention and the equivalent technologies thereof, the present invention also intends to encompass these modifications and variations.

## Claims

1. A display panel, comprising a first substrate and a second substrate, the first substrate has a first periodic structure, the second substrate has a second periodic structure and is arranged on the first substrate, **characterized in that**, the display panel further comprises a Moiré fringe inhibition layer, which is arranged on the second substrate and is configured to decrease a pitch of Moiré fringes produced by the first and second periodic structure.

2. The display panel of claim 1, **characterized in that**,
the Moiré fringe inhibition layer has a third periodic structure.

3. The display panel of claim 2, **characterized in that**,
the third periodic structure is identical with the first periodic structure; or
the third periodic structure is identical with the second periodic structure.

4. The display panel of claim 2, **characterized in that**,
the third periodic structure is different from the first and second periodic structure, and has a rectangular or rhombus grid.

5. The display panel of claim 2, **characterized in that**,
the third periodic structure is offset with respect to the first and second periodic structure.

6. The display panel of claim 2, **characterized in that**,
the third periodic structure is inclined with respect to the first and second periodic structure.

7. The display panel of claim 6, **characterized in that**,
the third periodic structure is inclined with respect to the first periodic structure by an angle of -5°∼5°.

8. The display panel of claim 2, **characterized in that**,
the Moiré fringe inhibition layer comprises a support layer and the third periodic structure on the support layer.

9. The display panel of claim 8, **characterized in that**,
the support layer is made from polyethylene terephthalate, and the third periodic structure is an electrically conductive mesh formed by nano-Ag, graphene or Cu.

10. The display panel of claim 8, **characterized in that**,
the support layer is made from a dielectric material, and the third periodic structure is made from a material with a different transmittance from the support layer.

11. The display panel of claim 8, **characterized in that**,
the Moiré fringe inhibition layer is directly formed on the second substrate.

12. The display panel of claim 8, **characterized in that**,
the Moiré fringe inhibition layer is a component detachable from the second substrate.

13. The display panel of claim 1, **characterized in that**,
the first substrate is a color film substrate; and
the second substrate is a touch substrate.

14. A touch display device, **characterized by** comprising the display panel of any one of claims 1-13.

15. A method for fabricating a display panel, **characterized by** comprising:
S1, preparing a first substrate which has a first periodic structure;
S2, arranging a second substrate on the first substrate which has a second periodic structure; and
S3, arranging a Moiré fringe inhibition layer on the second substrate to decrease a pitch of Moiré fringes produced by the first and second periodic structure.

16. The method of claim 15, **characterized in that**, step S3 comprises:
arranging the Moiré fringe inhibition layer on the second substrate, wherein the Moiré fringe inhibition layer has a third periodic structure.

17. The method of claim 16, **characterized in that**, step S3 comprises:
arranging the Moiré fringe inhibition layer on the second substrate, wherein the third periodic structure of the Moiré fringe inhibition layer is extracted from the first periodic structure or the second periodic structure.

18. The method of claim 16, **characterized in that**, step S3 comprises:
forming the third periodic structure which is different from the first and second periodic structure, wherein the third periodic structure has a rectangular or rhombus grid.

19. The method of claim 16, **characterized in that**, step S3 comprises:
arranging the Moiré fringe inhibition layer on the second substrate, and
offsetting the third periodic structure with respect to the first and second periodic structure.

20. The method of claim 16, **characterized in that**, step S3 comprises:
arranging the Moiré fringe inhibition layer on the second substrate, and
inclining the third periodic structure with respect to the first and second periodic structure.

21. The method of claim 20, **characterized in that**,
the third periodic structure is inclined with respect to the first periodic structure by -5°∼5°.

22. The method of claim 16, **characterized in that**, step S3 comprises:
preparing a support layer; and
forming the third periodic structure on the support layer.

23. The method of claim 22, **characterized in that**, step S3 comprises:
forming the support layer from polyethylene terephthalate; and
forming the third periodic structure from an electrically conductive mesh of nano-Ag, graphene or Cu.

24. The method of claim 22, **characterized in that**, step S3 comprises:
forming the support layer from a dielectric material; and
forming the third periodic structure from a material with a different transmittance from the support layer.

25. The method of claim 22, **characterized in that**, step S3 comprises:
forming the Moiré fringe inhibition layer directly on the second substrate.

26. The method of claim 22, **characterized in that**, step S3 comprises:
arranging the Moiré fringe inhibition layer on the second substrate by binding.

27. The method of claim 15, **characterized in that**,
the step S1 comprises: preparing a color film substrate; and
the step S2 comprises: arranging a touch substrate on the color film substrate.
